# EUROPEAN PATENT SPECIFICATION

(11) **EP 4 337 615 B1**
(45) Date of publication and mention of the grant of the patent: **22.01.2025**
(21) Application number: 22721896.3
(22) Date of filing: 28.04.2022
(51) Int. Cl.: C02F 1/48, C02F 103/08

(54) **EQUIPMENT FOR SEAWATER DESALINATION**
VORRICHTUNG ZUR MEERWASSERENTSALZUNG
ÉQUIPEMENT DE DESSALEMENT D'EAU DE MER

(30) Priority: 12.05.2021 IT 202100012239
(43) Date of publication of application: 20.03.2024
(73) Proprietor: MUNARINI, Walter, 36100 Vicenza (VI) (IT)
(72) Inventor: MUNARINI, Walter, 36100 Vicenza (VI) (IT)
(74) Representative: Ziliotto, Tiziano
(86) International application number: PCT/IB2022/053940
(87) International publication number: WO 2022/238807

(56) References cited:
- WO-A1-2005/061392
- WO-A1-2006/039873
- WO-A1-2019/229674
- US-A1- 2017 305 765

## Description

### TECHNICAL FIELD OF THE INVENTION

The present invention is related to the field of salt water desalination systems, in particular seawater.

More specifically, the present invention concerns a new equipment for desalinating salt water.

### DESCRIPTION THE STATE OF THE ART

Different systems known in the art are suited to decrease the saline component in water, typically seawater, for possible common uses, such as for domestic use, in boats, in agriculture or for industrial applications.

Such systems are therefore configured to receive water, for example seawater, with high concentrations of salt NaCl, and produce, as an output, water with a reduced salt concentration, or desalinated water. In fact, typically, seawater contains various types of salts, the average concentration of salt NaCl being about 27 g/litre, which constitutes about 70% of all dissolved salts. In the water, the Na+ and Cl- ions of salt NaCl move independently.

A first desalination method of the known type is based on evaporation phenomena. According to this solution, the water is subjected to evaporation, during which vapour is separated from the saline component which is deposited in a solid layer. The vapour is then condensed and collected for its final use. This method, although relatively simple, is particularly inefficient. In fact, significant amounts of energy are required to evaporate the water and, in addition, the process itself is particularly slow. This makes the process inefficient both in terms of energy and in terms of time and/or flow rate of the generated water.

A second desalination method of the known type is based on the principle of reverse osmosis, or hyperfiltration.

This process forces the movement of the solvent molecules from the more concentrated solution to the less concentrated solution by applying a pressure greater than osmotic pressure to the more concentrated solution. In practical terms, the water to be treated (to be desalinated) is pushed against a membrane by a pump, which exerts a pressure that is higher than osmotic pressure, so as to obtain two outgoing flows: the incoming water portion that crosses the membrane is the permeate (with a low salt concentration) which is intended for the final use, while the remaining part of the water, called concentrate (rich in salts), flows out with a high salt concentration, due to the accumulation of all the salts that have not crossed the membrane, and is discarded.

However, this technique also has some drawbacks, such as: high energy consumption due to the use of high/very high-pressure pumps; limited desalinated water flow rate; risk of contamination and deposit build-ups in the membranes that thus require frequent replacement, especially if the device is unused for long periods of time; unsuitability for short periods of use alternating with long periods of non-use.

The main object of the present invention is therefore to solve, or at least partially overcome, the aforementioned drawbacks that characterize the prior art.

More specifically, it is one object of the present invention to provide a more energy-efficient solution than the systems of the known type.

It is another object of the present invention to provide a more efficient solution in terms of desalinated water flow rate than the systems of the known type.

It is a further object of the present invention to provide a solution having reduced operating costs compared to the systems of the known type.

It is a further object of the present invention to provide a solution which is more reliable over time than the systems of the known type. State-of-the-art desalination devices are known from, for example, WO 2005/061392.

### SUMMARY OF THE PRESENT INVENTION

Herein described is therefore a desalination method intended to obtain a final flow of desalinated water from an incoming flow of salt water, wherein the method comprises the following steps:
- making said incoming flow run through a first unit and through a first electric field generated in said first unit, said first electric field affecting said incoming flow to generate a first outgoing flow of negatively ionized water comprising CL- ions and a second outgoing flow of positively ionized water comprising NA+ ions, said first flow and said second flow being separate from each other;
- making said first flow run through a second unit and through a second electric field generated in said second unit, said second electric field affecting said first flow to generate a final outgoing flow of negatively ionized water comprising CL- ions and a final flow of desalinated water, and/or
- making said second flow run through a third unit and through a third electric field generated in said third unit, said third electric field affecting said second flow to generate a final outgoing flow of positively ionized water comprising Na+ ions and a final flow of desalinated water.

According to the present invention, the subject of the same is a piece of equipment for the desalination of an incoming flow of salt water, wherein the equipment comprises:
- a first unit provided with an inlet for said incoming flow, said first unit comprising a first plate suited to be positively polarized and a second plate suited to be negatively polarized to generate a first electric field, said plates of said first unit being mutually positioned in such a way as to define an area suited to receive said incoming flow, in which said first electric field acts, said first plate of said first unit comprising one or more openings suited to allow a first water flow to run towards a first outlet way external to said first electric field and said second plate of said first unit comprising one or more openings suited to allow a second water flow to run towards a second outlet way external to said first electric field;
- a second unit provided with an inlet which is hydraulically connected to said first outlet way, said second unit comprising a first plate suited to be positively polarized and a second plate suited to be negatively polarized to generate a second electric field, said plates of said second unit being mutually positioned in such a way as to define an area suited to receive said first flow, in which said second electric field acts, said first plate of said second unit comprising one or more openings suited to allow the outflow of water towards a third outlet way external to said second electric field and said second plate of said second unit comprising one or more openings suited to allow the outflow of desalinated water towards a fourth outlet way external to said second electric field, and/or
- a third unit provided with an inlet which is hydraulically connected to said second outlet way, said third unit comprising a first plate suited to be positively polarized and a second plate suited to be negatively polarized to generate a third electric field, said plates of said third unit being mutually positioned in such a way as to define an area suited to receive said second flow, in which said third electric field acts, said second plate of said third unit comprising one or more openings suited to allow the outflow of water towards a fifth outlet way external to said third electric field and said first plate of said third unit comprising one or more openings suited to allow the outflow of desalinated water towards a sixth outlet way external to said third electric field.

The plates of the first unit and/or the plates of the second unit and/or the plates of the third unit comprise an electrically conductive material, preferably a metallic material, more preferably copper or aluminium.

Moreover, the plates of the first unit and/or the plates of the second unit and/or the plates of the third unit are at least partially coated with a covering material. The covering material is preferably an electrically insulating, or non-conductive, material with certain dielectric characteristics. In a preferred embodiment, the covering material has a relative dielectric constant included between 1,000 and 10,000 and more preferably included between 7,000 and 10,000, and electric resistivity higher than 10¹² Ω*cm. Finally, the covering material comprises one or more of the materials belonging to the group comprising: barium titanate oxide, doped variants of barium titanate, perovskite mineral, lead zirconate titanate, lead metaniobate. According to a preferred embodiment, the equipment comprises a pump associated with the inlet of the first unit and/or a pump associated with the first outlet way of the first unit and/or a pump associated with the second outlet way of the first unit and/or a pump associated with the third outlet way of the second unit and/or a pump associated with the fourth outlet way of the second unit and/or a pump associated with the fifth outlet way of the third unit and/or a pump associated with the sixth outlet way of the third unit.

In a preferred embodiment, at least one plate of the plates of the first unit and/or of the plates of the second unit and/or of the plates of the third unit comprises two or more electrically conductive elements arranged side by side and electrically connected to one another, wherein said two elements are spaced to define said one or more openings of said at least one plate.

Preferably, said two or more electrically conductive elements are at least partially coated with said covering material.

According to a preferred embodiment, at least one plate of the plates of the first unit and/or of the plates of the second unit and/or of the plates of the third unit comprises an electrically conductive foil provided with through holes suited to define said one or more openings of said at least one plate.

In a preferred embodiment, the foil is at least partially coated with said covering material.

According to a preferred embodiment, one side of said at least one plate is also provided with at least one electrically insulating covering layer.

Preferably, the first unit and/or the second unit and/or the third unit comprises a plurality of first and second plates conveniently configured to receive the same flow coming from the inlet of the respective unit.

### BRIEF DESCRIPTION OF THE FIGURES

Further advantages, objectives and features as well as embodiments of the present invention are defined in the claims and are clarified below by means of the following description, in which reference is made to the attached drawings. In particular, in the figures:
- Figure 1 shows a schematic view illustrating the operating principle of the desalination equipment;
- Figure 2 shows a variant embodiment of Figure 1;
- Figure 3 shows another variant embodiment of Figure 1;
- Figure 4 shows a detail of the embodiment of Figure 1;
- Figure 5 shows an axonometric view of a piece of equipment according to a preferred embodiment of the invention;

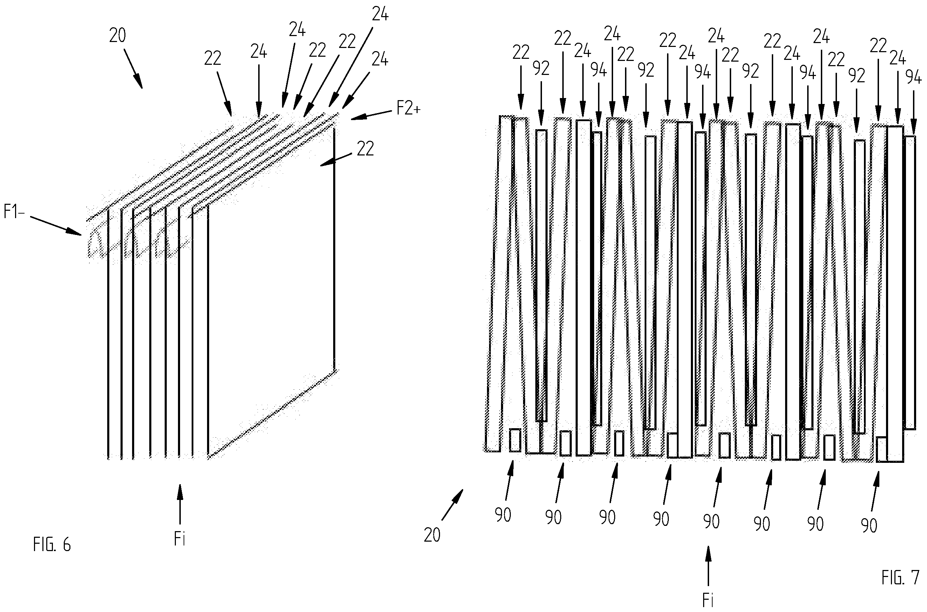

- Figure 6 shows an axonometric view of a construction part of the equipment of Figure 5;
- Figure 7 shows a plan view of the detail of Figure 6;
- Figures from 8A to 8F show in sequence construction details of the part of Figure 6;
- Figure 9 shows an exploded view of Figure 6;
- Figure 10 shows an enlarged detail of Figure 9;
- Figure 11 shows the detail of Figure 10 in a particular operating position;
- Figure 12 shows an enlarged detail of Figure 9;
- Figure 12A shows an enlarged detail of Figure 12;
- Figure 13 shows another enlarged detail of Figure 9;
- Figure 14 shows a variant embodiment of the elements of Figures 12 and 13;
- Figure 15 shows another variant embodiment of Figure 1;
- Figure 16 shows an axonometric view of a piece of equipment according to the preferred embodiment of the invention shown in Figure 15;
- Figure 17 shows a plan view of a construction detail of the equipment of Figure 16.

### DETAILED DESCRIPTION OF SOME PREFERRED EMBODIMENTS OF THE PRESENT INVENTION

Although the present invention is described below with reference to its embodiments shown in the drawings, the present invention is not limited to the embodiments described below and represented in the drawings.

On the contrary, the embodiments described herein and shown in the drawings clarify some aspects of the present invention, the purpose of which is defined by the claims.

The present invention has been found to be particularly advantageous when applied to equipment for the desalination of salt water providing desalinated water as an output, for example equipment used for domestic purposes. However, it should be noted that the present invention is not limited to such type of use. On the contrary, the present invention is conveniently applied in all those cases requiring desalination of salt water for any use, for example for obtaining desalinated water to be used in irrigation systems for agriculture, in industrial applications or in boats.

A preferred embodiment of salt water desalination equipment according to the present invention, hereinafter also simply referred to as desalination equipment and indicated as a whole by 10, is described below with reference to the figures. The desalination equipment 10 according to the present invention preferably implements a new salt water desalination method, which is also the subject of the present invention.

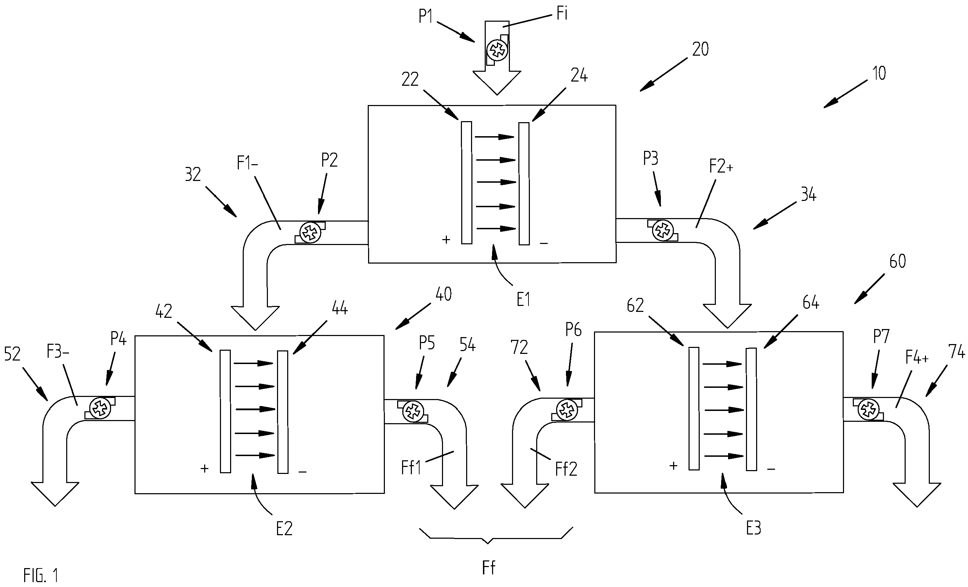

The new desalination method is described below with reference to Figure 1, in which the desalination equipment 10 is shown in a schematic and simplified manner.

The desalination method has the objective of obtaining a final flow Ff of desalinated water from an incoming flow Fi of salt water.

According to the preferred embodiment illustrated in Figure 1, the method makes it possible to obtain a final flow Ff of desalinated water as a sum of two separate flows Ffl, Ff2 of desalinated water.

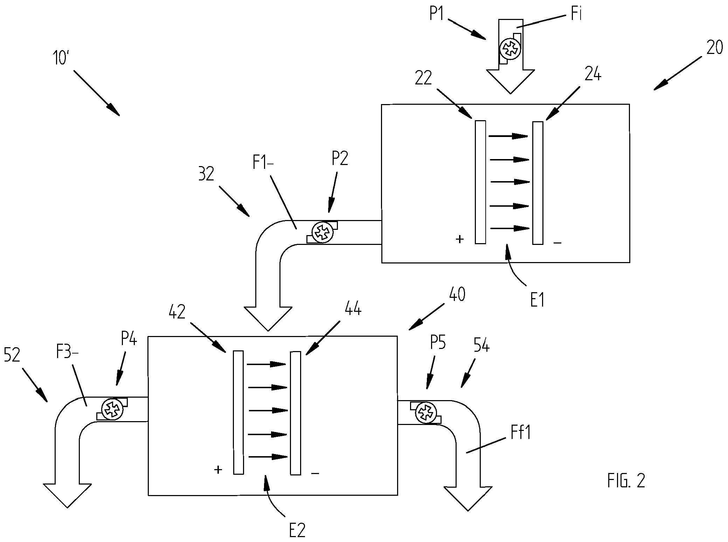

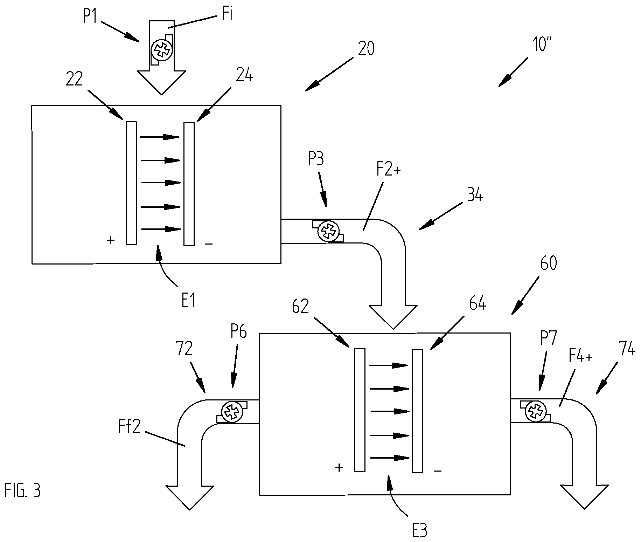

In a variant embodiment, however, the final flow Ff of desalinated water can be only one, as shown in the variants of Figures 2 and 3 that are better described below.

According to an aspect of the present invention, the method comprises a first step in which the incoming flow Fi of salt water is conveyed through a first unit 20 and, preferably, through a first electric field E1 generated in said first unit 20. The first electric field E1 is preferably obtained by means of a first plate 22 suited to be positively polarized and a second plate 24 suited to be negatively polarized, as described in greater detail below.

The two plates 22, 24 are preferably arranged parallel to each other.

The incoming flow Fi of salt water therefore runs between the plates 22, 24 and substantially parallel to them.

The first electric field E1 interacts with the incoming flow Fi of salt water to generate a first outgoing flow F1- of negatively ionized water comprising CL-ions and a second outgoing flow F2+ of positively ionized water comprising NA+ ions, wherein the first flow F1- and the second flow F2+ are separate from each other.

As is known, in fact, positive ions Na+ and negative ions CL- are present/dissolved in salt water. The electric charge constituted by said ions and affected by the electric field E1 is subjected to a force that is perpendicular to the plates, and thus to a corresponding acceleration/displacement. The negative ions CL- are therefore attracted towards the first positively polarized plate 22 while the positive ions Na+ are attracted towards the second negatively polarized plate 24.

In other words, the positive ions Na+ and the negative ions CL- of the salt water enter between the plates 22, 24 in a direction parallel to the plates, while the attraction force of the first electric field E1 causes the ions to deviate by 90°, attracting them towards the plates 22, 24 themselves according to their polarity. Furthermore, preferably, the first positively polarized plate 22 attracts the negative ions CL- and at the same time repels the positive ions Na+. This double effect of attraction and repulsion of opposite charges allows a clearer separation of positive and negative charges to be obtained in proximity to the first positively polarized plate 22. Analogously, the second negatively polarized plate 24 attracts the positive ions Na+ and at the same time repels the negative ions Cl-. This double effect of attraction and repulsion of opposite charges allows a clearer separation of positive and negative charges to be obtained in proximity to the second negatively polarized plate 24.

At the level of the first plate 22, therefore, the liquid (water) contains higher concentrations of CL- ions and at the level of the second plate 24 the liquid (water) contains higher concentrations of Na+ ions.

According to an aspect of the present invention, the first plate 22 is conveniently configured to remove the portion of liquid (water) with a higher concentration of CL- ions and generate the first flow F1- towards a corresponding first outlet way 32, as described in greater detail below. The first flow F1- and the corresponding first outlet way 32 are preferably external to the area affected by the first electric field E1.

Analogously, the second plate 24 is conveniently configured to remove the portion of liquid (water) with a higher concentration of Na+ ions and generate the second flow F2+ towards a corresponding second outlet way 34, as described in greater detail below. The second flow F2+ and the corresponding second outlet way 34 are preferably external to the area affected by the first electric field E1. According to another aspect of the present invention, the method includes a subsequent step in which the first flow F1- comprising a predominant concentration of negative ions Cl- is conveyed through a second unit 40 and, preferably, through a second electric field E2 generated in said second unit 40. The second electric field E2 is preferably obtained by means of a first plate 42 suited to be positively polarized and a second plate 44 suited to be negatively polarized.

The second electric field E2 interacts with the first flow F1- comprising a predominant concentration of negative ions Cl- to generate a final flow F3- of negatively ionized water comprising CL- ions and a final flow Ff1 of desalinated water.

The negative ions CL- of the first flow F1-, in fact, are attracted towards the first positively polarized plate 42.

At the level of the first plate 42, therefore, the liquid (water) contains higher concentrations of CL- ions and at the level of the second plate 44 the liquid (water) instead contains no CL- ions (and no Na+ ions, which were previously removed in the first unit 20).

According to an aspect of the present invention, the first plate 42 is conveniently configured to remove the portion of liquid (water) with a higher concentration of CL- ions and generate the final flow F3- of negatively ionized water towards a corresponding third outlet way 52. The final flow F3- and the corresponding third outlet way 52 are preferably external to the area affected by the second electric field E2.

Analogously, the second plate 44 is conveniently shaped to remove the desalinated liquid (water) portion and generate the final flow Ff1 towards a corresponding fourth outlet way 54. The final flow Ff1 of desalinated water and the corresponding fourth outlet way 54 are preferably external to the area affected by the second electric field E2.

According to what has been described so far, the new method according to the invention makes it possible to achieve the objective of obtaining a first final flow Ff1 of desalinated water from the incoming flow Fi of salt water.

Moreover, as described below, the new method according to the invention makes it possible to achieve the objective of obtaining also a second final flow Ff2 of desalinated water which is added to the first final flow Ff1, optimizing the generation of desalinated water.

In fact, preferably, according to another aspect of the present invention, the method comprises a step in which the second flow F2+ comprising a high concentration of positive ions Na+ exiting the first unit 20 is conveyed through a third unit 60 and, preferably, through a third electric field E3 generated in said third unit 60.

The third electric field E3 is preferably obtained by means of a first plate 62 suited to be positively polarized and a second plate 64 suited to be negatively polarized. The third electric field E3 affects the second flow F2+ comprising a high concentration of positive ions Na+ to generate a final flow F4+ of positively ionized water comprising Na+ ions and a final flow Ff2 of desalinated water. The positive Na+ ions of the second flow F2+, in fact, are attracted towards the second negatively polarized plate 64.

At the level of the second plate 64, therefore, the liquid (water) contains higher concentrations of Na+ ions and at the level of the first plate 62, instead, the liquid (water) is devoid of Na+ ions (as well as devoid of Cl- ions already removed previously in the first unit 20).

According to an aspect of the present invention, the second plate 64 is conveniently configured to remove the portion of liquid (water) with a higher concentration of Na+ ions and generate the final flow F4+ of positively ionized water towards a corresponding fifth outlet way 74. The final flow F4+ and the corresponding fifth outlet way 74 are preferably external to the area affected by the third electric field E3.

Analogously, the first plate 62 is conveniently configured to remove the desalinated portion of liquid (water) and generate the final flow Ff2 towards a corresponding sixth outlet way 72. The final flow Ff2 of desalinated water and the corresponding sixth outlet way 72 are preferably external to the area affected by the third electric field E3.

Therefore, due to what has been described above, the desalination equipment 10 according to the invention makes it possible to obtain a final flow Ff of desalinated water as the sum of the two separate flows Ff1, Ff2.

Moreover, the final flow F3- of negatively ionized water exiting the third outlet way 52 of the second unit 40 and/or the final flow F4+ of positively ionized water exiting the fifth outlet way 74 of the third unit 60 can be discharged or, in turn, conveyed towards further separation units of the type described above to obtain further flows of desalinated water containing no ions (negative Cl- or positive Na+).

Moreover, again, in the case where the final flow Ff should contain residual concentrations of Na+ and Cl- ions, it is possible to provide for conveying it towards further separation units of the type described above in order to further refine/desalinate the water.

It is evident that in a preferred variant embodiment, shown in Figure 2, the equipment 10' according to the invention may comprise only the first and the second unit 20, 40, obtaining as an output the first final flow Ff1 of desalinated water from the incoming flow Fi of salt water.

In another preferred variant embodiment, shown in Figure 3, the equipment 10" according to the invention, instead, may comprise only the first and the third unit 20, 60, obtaining as an output the second final flow Ff2 of desalinated water from the incoming flow Fi of salt water.

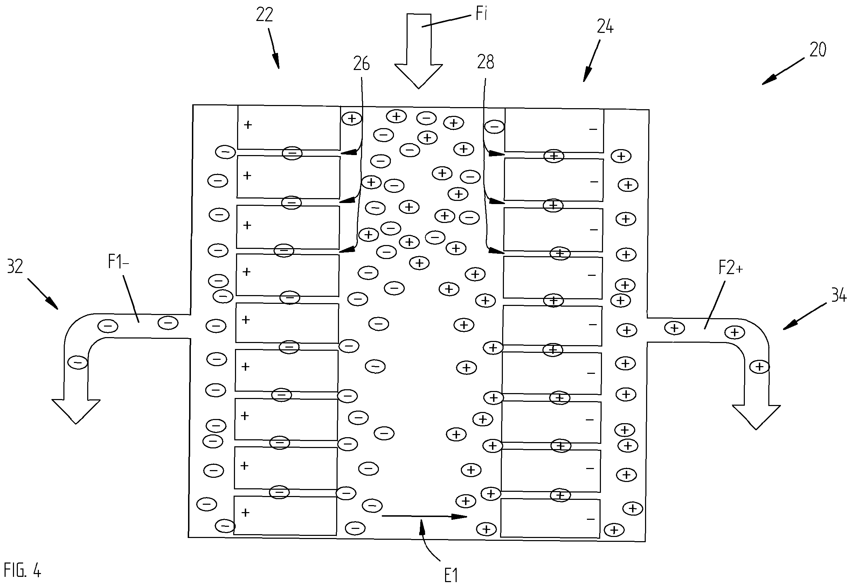

A preferred embodiment of the first unit 20 is schematically described below making reference to Figure 4. What is described for the first unit 20 can be applied, *mutatis mutandis,* to the other units 40, 60 of the equipment 10. In particular, Figure 4 schematically shows how the first positively polarized plate 22 is conveniently configured to remove the portion of liquid (water) with a higher concentration of CL- ions and generate an outgoing flow F1- with a high concentration of negative ions Cl- and how the second negatively polarized plate 24 is conveniently configured to remove the portion of liquid (water) with a higher concentration of Na+ ions and generate an outgoing flow F2+ with a high concentration of negative ions Na+.

According to a first aspect of the present invention, the first plate 22 comprises a plurality of openings 26 suited to allow water to flow through them. Said openings/slits 26 interrupt the first plate 22 and create intermediate channels where water can flow towards the first outlet way 32 to generate the outgoing flow F1-.

Analogously, the second plate 24 comprises a plurality of openings 28 suited to allow water to flow through the same. Said openings/slits 28 interrupt the second plate 24 and create intermediate channels where water can flow towards the second outlet way 34 to generate the outgoing flow F2+.

By means of the polarized plates 22, 24, therefore, the Cl- and Na+ ions are attracted by the corresponding plates and then removed to be conveyed towards the outside.

More specifically, in the area closest to the first plate 22, the Cl- ions are attracted while the Na+ ions are repelled. In proximity to the first plate 22, the separation between Cl- and Na+ ions occurs correctly and clearly. In the area closest to the second plate 24, the Na+ ions are attracted while the Cl- ions are repelled. In proximity to the second plate 24, the separation between Cl- and Na+ ions occurs correctly and clearly.

It should be noted that the separation of charges does not occur only at the end of the path between the plates 22, 24 but progressively along the entire extension of the intermediate channel defined between the plates 22, 24. Thanks to the intermediate slits 26, 28, the separation of ions occurs continuously and progressively along the entire intermediate channel.

In the figure, the dimensions of the openings 26, 28 with respect to the size of the respective plate 22, 24 are intentionally enlarged for illustrative purposes. In practice, as is better described below, the openings 26, 28 have reduced dimensions in order to allow a correspondingly reduced amount of water with the related ions to flow out.

For this reason, as explained in greater detail below, in the practical embodiment of the first unit 20, or of the second and/or third unit 40, 60, a plurality of pairs of plates 22, 24 are used in parallel in order to guarantee a sufficient flow of water towards the respective outlet ways (F1-, F2+, F3-, Ff1, F4+, Ff2).

According to an aspect of the present invention, the first and the second plate 22, 24 are made of an electrically conductive material, preferably a metallic material, and more preferably copper or aluminium.

In order to be able to ensure the correct separation of flows described above, the plates 22, 24 are preferably coated with an insulating material having a sufficient dielectric constant to provide a high electric field E1 and at the same time high resistance, or low conductivity, to avoid conduction and thus electrolysis.

In fact, advantageously, the insulating material does not release electric charges. In this way, the phenomenon of electrolysis at the level of the surfaces of the plates 22, 24 is prevented.

The phenomenon of electrolysis, as is known, would alter the ionic nature of the water, causing the Cl- and Na+ ions to recombine for the generation of electrically neutral molecules (for example, Cl2 and NaOH), and thus preventing the separation of the flows described above. In addition, said substances/molecules would alter the nature of the water, actually polluting it and making it unusable, for example for domestic purposes.

In addition, it is preferable to place the plates 22, 24 very close to each other in order to be able to generate a high electric field E1 and at the same time define the shortest possible path for the Cl- and Na+ ions so that they can reach the openings 26, 28 and thus exit passing along the plates 22, 24.

The usable covering materials have a relative dielectric constant De included between 1,000 and 10,000, and more preferably included between 7,000 and 10,000.

The usable covering materials have electrical resistivity Re higher than 10¹² Ω*cm.

In a preferred embodiment, the covering material comprises barium titanate oxide BaTiO.

The covering material must therefore have electrical insulating properties (high resistance) and at the same time a high relative dielectric constant.

The best known and most representative material is said barium titanate BaTiO3, which has these two characteristics and is also chemically inert and stable to a sufficient degree at the expected temperatures and in the expected environments of use.

However, there are other materials with similar characteristics that could be alternatives to barium titanate BaTiO3.

Such alternative materials include those with a similar crystalline structure such as the mineral perovskite (CaTiO3) or other types such as lead zirconate titanate (Pb(Zr,Ti)O3 also known as PZT).

Variants of BaTiO3 are also interesting, where different doping materials may be present (for example, cobalt), or lead metaniobate (PbNb2O6).

This presentation does not intend to specify a single material, however barium titanate BaTiO3 is considered as a reference example of the required characteristics. In any case, other materials may be used in order to optimize performance, costs, reliability, processing methods, and accuracy in developing the desired thickness.

The covering material advantageously covers at least the portion of the respective plate that is in contact with the liquid/water.

In a preferred alternative embodiment, the first and the second plate 22, 24, in addition to being made of an electrically conductive material with said covering material, also have an electrically insulating covering layer applied to the rear side of the plate 22, 24 itself. Rear side means the side of the membrane that is affected by the liquid once the latter has flowed through the respective openings 26, 28. Preferably, the electrically insulating covering layer comprises a plastic material and/or an inert paint. Preferably, the electrically insulating covering layer is applied by spraying the material itself.

The presence of said covering layer makes it possible to reduce or eliminate the phenomenon of slowing down of the ions which have just passed through the plate through the openings and which are subjected to the electric field generated by the plate.

The covering layer with insulating characteristics reduces or eliminates the dielectric properties of the plate on its rear side. In this way, the electric field that attracts the ions is reduced or eliminated.

From what has been described above, it can be deduced that the method according to the invention makes it possible to provide a piece of equipment which does not require high pressure pumps as, for example, in the case of the reverse osmosis systems of the known type, with a corresponding drastic decrease in power consumption.

Advantageously, furthermore, the use of passive membranes, as is the case with reverse osmosis systems, is also eliminated. Therefore, no flow rate limits are imposed by said membranes and the flow rate can be higher than in the systems of the known type.

In addition, the risks of fouling and contamination of the system are reduced, thus ensuring lower operating costs and greater reliability over time. Furthermore, preferably, in order to avoid fouling, the polarity of plates 22, 24 can be periodically reversed, as the system can work in an absolutely symmetrical way.

Moreover, since the plates are covered with an insulating dielectric material, it is possible to increase the power supply voltage (for example to >100V), and thus to obtain a higher electric field, without running the risk of inducing chemical or physical phenomena in the dissolved substances, such as electrolysis.

In addition, since the plates themselves also act as membranes, there is a shorter distance between the plates generating the electric field and therefore the latter is even more intense.

For better optimization and correct subdivision of the water flows among the various units that define the equipment 10, 10', 10" according to the invention, one or more pumps P1÷P7 are preferably used.

Preferably, a first pump P1 is associated with the incoming flow Fi to regulate the feeding of water towards the first unit 20. The first pump P1 makes it possible to adjust the pressure of the salt water that feeds the desalination equipment of the invention 10, 10', 10". The operating parameters of the first pump P1 can be conveniently adjusted also according to the spatial arrangement of the equipment and the various units making it up.

Preferably, in fact, the desalination equipment is configured in such a way that the incoming flow Fi of salt water is from bottom to top. In preferred variant embodiments, however, the various flow patterns may be different, for example from top to bottom or horizontal or oblique.

Other pumps P2÷P7 are preferably associated with the various incoming and/or outgoing flows of the various units in order to guarantee the correct flow between the various units themselves.

The pumps P1÷P7 preferably comprise suction pumps with speed and/or pressure control.

A suitable control unit, not shown, preferably controls the correct operation of said pumps P1÷P7 and consequently regulates the various flows.

The pumps with which the desalination equipment of the invention is equipped make it possible to control the water inlet/outlet speed and the flow rate, in particular between the various plates.

A fundamental aspect, in fact, is the need to guarantee a given speed of the liquid flowing into and especially out of the units 20, 40, 60. This is due to the fact that the electric field between the plates can produce a certain outlet (or rather, drift) speed of the ions exiting from the intermediate slits 26, 28. Said drift speed produced by the electric field must always be higher than the speed of the water flowing out of the slits, in order to allow all the ions to exit from the correct side and not be sucked in from the wrong side or, in other words, in order to obtain an outlet speed of the water that is "much lower" than the drift speed (removal) of the ions under the effect of the electric field.

A preferred embodiment of the desalination equipment 10 according to the invention is described below with reference to Figures from 5 to 13.

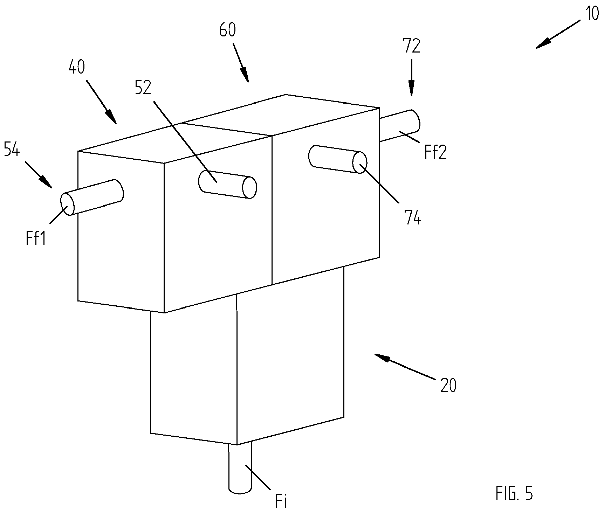

Figure 5 shows an axonometric view of a desalination equipment 10 according to a preferred embodiment of the invention.

It is possible to identify the incoming flow Fi of salt water that feeds the first unit 20, the second and the third unit 40, 60 with the fourth and the sixth outlet way 54, 72 defining the final flows Ff1, Ff2 of desalinated water and with the third and the fifth outlet way 52, 74 of water to be discharged, according to what has been described above and is shown in Figure 1.

The three units 20, 40, 60 defining the desalination equipment 10 have substantially the same configuration and for this reason only one of said units, unit 20, is described below with reference to Figures from 6 to 13.

In order to illustrate its operating principle, the unit 20 has so far been described as having only one pair of plates 22 and 24.

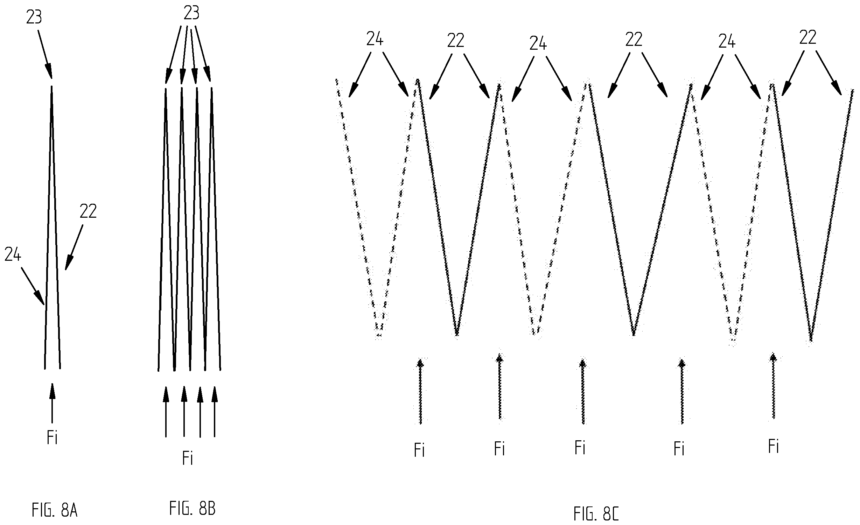

However, in order to increase the capacity of the system, the unit 20 according to the preferred embodiment illustrated in the figures preferably comprises a plurality of pairs of plates 22, 24, as shown in Figure 8A, respectively polarized positively and negatively, and conveniently positioned next to each other to define a set of plates 22, 24 (as shown in Figure 8B).

The size of the plates 22, 24 can be, for example, 5cm x 5cm or larger, according to the design specifications (flow rate, power supply, type of use).

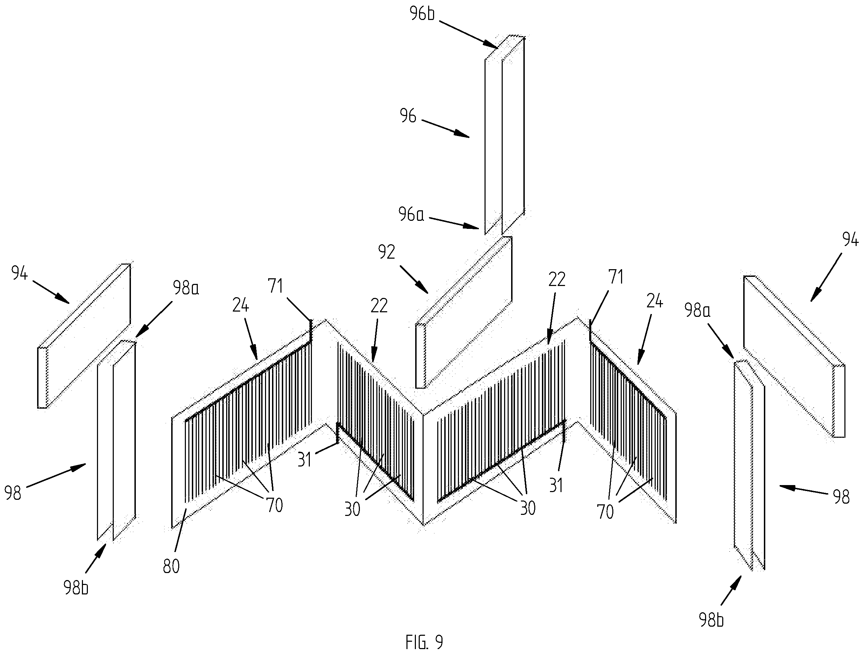

According to the preferred embodiment illustrated in the figures, each plate 22, 24 comprises a plurality of side-by-side conductors 30, 70 electrically connected to one another, preferably via a power supply conductor 31, 71, as shown in Figures 9, 12 and 13.

The power supply conductors 31, 71 are then conveniently connected to a power supply system, for example to a DC power supply unit having a power supply voltage of 12 Volts or higher, according to the design specifications (flow rate, size, type of use, etc).

It is important that the electrical connection elements are always covered with the insulating material, in order to prevent them from coming into contact with water.

The conductors 30, 70 defining the plate 22, 24 are placed side by side and spaced so as to define a plurality of respective slits 26, 28 between them. Said slits constitute the openings 26, 28 suited to allow the passage of water according to the methods described above.

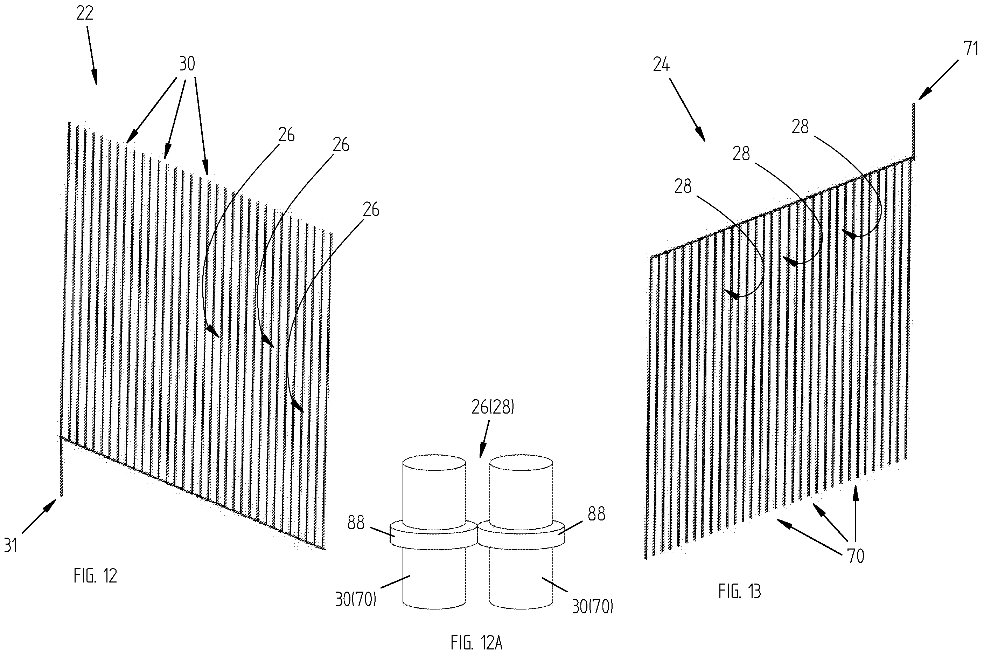

Preferably, said slits/openings 26, 28 are obtained by keeping the conductors 30, 70 at a distance included between 5nm and 100nm, preferably at a distance included between 5nm and 10nm, even more preferably at a distance of 7.5nm. In a preferred/possible embodiment, as shown in the non-scaled detail of Figure 12A, such a distance is achieved by means of a ring 88 that envelops the conductors 30, 70, preferably obtained by spreading layers of paint in a ring pattern (instead of using a mechanical shim to obtain the space between the plates, the paint may be a few nm thick and thus suited to provide the required spacing).

Preferably, the conductors 30, 70 comprise copper or aluminium conductors, preferably with a diameter of 0.1mm.

Furthermore, each conductor 30, 70 is preferably coated with an insulating material having a sufficient dielectric constant and at the same time high resistance, as described above, and is preferably coated with barium titanate oxide BaTi03 or other equivalent materials.

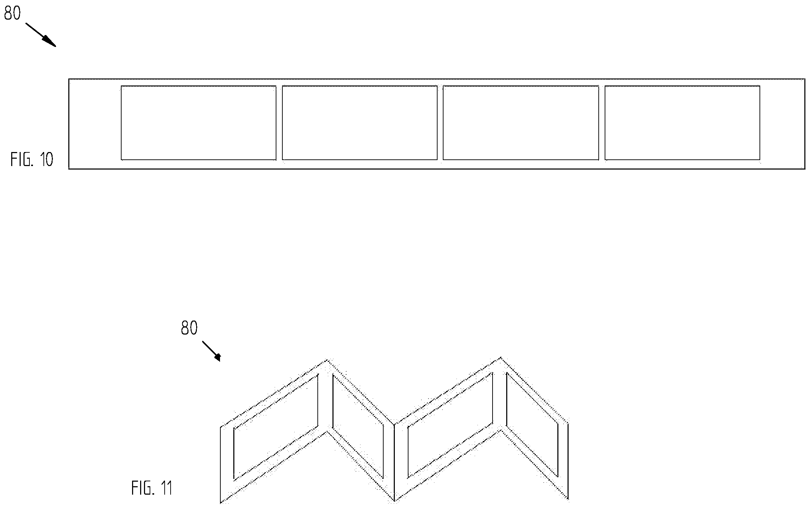

In order to shape the plate 22, 24 as desired, for example in the substantially plane rectangular shape shown in the figures, a slotted support strip 80, shown in Figure 10, is preferably used, to which the side-by-side conductors 30, 70 adhere. The slots in the support strip 80 allow the passage of water.

The slotted support strip 80, moreover, is preferably folded at each space between the slots, as shown in Figure 11. The conductors 30, 70 and the related power supply contacts 31, 71 can be laid on the slots of the tape 80 in order to create a series of side-by-side and alternating plates 22, 24, as shown in Figure 9. The support strip 80 preferably comprises a film of inert plastic material and the conductors 30, 70 are preferably glued to said tape 80.

A single pair of plates 22, 24 in front view appears as shown in Figure 8A. There is an open side serving as an inlet for the flow Fi and a closed side 23. The two plates are facing each other with decreasing distance towards the closed side 23.

By joining several plates positioned side by side and with the support constituted by the slotted tape 80, it is possible to obtain a plurality of plates with a plurality of inlets for the flow Fi, as shown in Figure 8B.

According to the preferred embodiment illustrated in the figures, the pairs of plates 22, 24 are arranged side by side in such a way as to feature alternating polarizations, as shown for illustrative purposes in Figure 8C, in which the plates are shown spaced apart and inclined in a fictitious manner for illustrative purposes only (for illustrative purposes, the first plate 22 being indicated by a continuous line and the second plate 24 being indicated by a dashed line). Advantageously, the support strip 80 used for the various plates 22, 24 comprises a single common layer in an elongated shape, to which all the plates 22, 24 are applied so that they adhere to it in succession. In the construction step, the support strip is conveniently folded in an "accordion" configuration to obtain the final compact shape.

In their actual closed position the pairs of plates 22, 24 are substantially parallel and minimally spaced apart for the generation of the desired electric field E1. In a preferred embodiment, the plates are placed at a distance from each other included between 5 nm and 100 nm, preferably at a distance included between 5 nm and 10 nm, even more preferably at a distance of 7.5 nm.

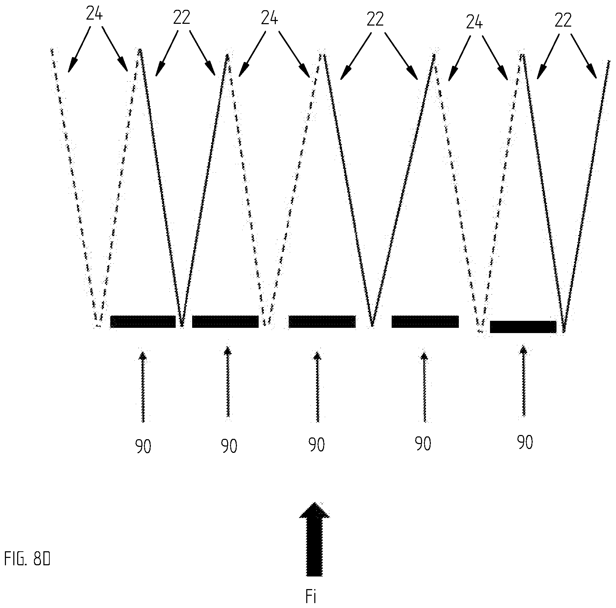

Preferably, a spacer element 90, for example a porous membrane, guarantees said distance between the plates 22, 24. As shown in Figure 8D, said spacer element is placed only in the initial inlet section Fi in order to ensure the entry of water between the plates 22, 24. The fact that the distance between the plates 22, 24 decreases towards the closed end 23 is also advantageous.

While in the preferred embodiment shown in the figures the plates 22, 24 as a whole have a planar shape and are uniformly spaced apart, in preferred variant embodiments the shape and the distances between the plates may be different. For each pair of plates 22, 24 it is possible to identify the respective inlet channel for the salt water Fi, which is affected by the electric field E1 generated between the two plates (as described above). The water flows out of the plates 22, 24 through said openings 26, 28 with the generation of the respective flows F1- and F2+, as described above.

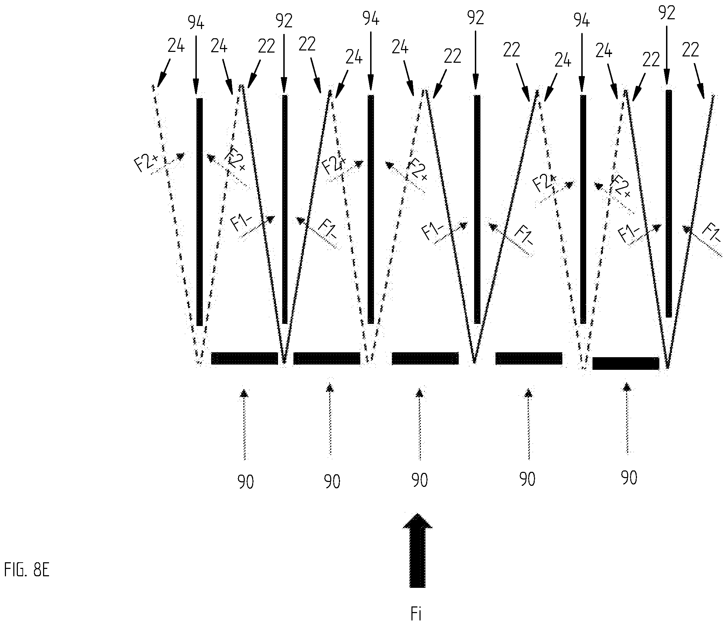

The alternating arrangement of the pairs of plates 22, 24 makes it possible to convey two flows that are homologous, that is, flows with the same negative ions F1- or the same positive ions F2+, with those of two adjacent pairs on the same side, as shown in Figure 8E.

The two adjacent flows of the same sign are appropriately collected and conveyed towards the outside. To create the space and collect the outgoing water, a conveying/collecting membrane 92, 94 is used.

Said membrane 92, 94 may also be coated with a metallic paint in order to isolate electric fields between adjacent elements. In fact, while the electric field E1 between 22 and 24 must be maximised, the electric fields in the outer part can be equal to zero and above all be such as not to interfere with the field E1 of the adjacent cell. By metallizing the membrane 92, 94, it is thus possible to form an electric screen.

The two flows F1-, F2+ run along the collecting membranes 92, 94 until they reach a liquid collection raceway 96, 98, preferably a U-shaped sheath, as shown in Figure 9.

The raceway 96, 98 preferably has a closed end 96a, 98a suited to confine the liquid and an open end 96b, 98b suited to discharge the liquid.

Figure 9 shows an exploded and side view of the assembly made up of the plates 22, 24, the support strip 80, the conveying/collecting membranes 92, 94, the collection raceways 96, 98.

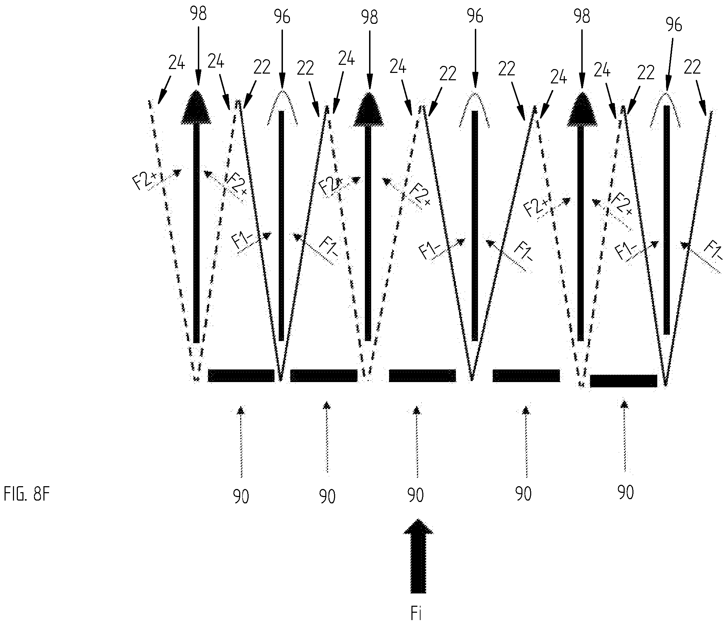

Figure 8F shows the front view of the same structure. In the figure, the open side 96b of the raceway 96 is light, while the closed side 98a of the raceway 98 is dark. In a mirror-like manner, on the other side there are the closed sides 96a and the open sides 98b.

A plurality of raceways and respective conveying/collecting membranes are therefore arranged next to each other so as to collect, in an alternating manner, positive and negative outgoing flows. Preferably, all the positive flow collecting raceways 98 have the open discharging end 98b on the same side with respect to the set of plates 22, 24 and all the negative flow collecting raceways 96 have the open discharging end 96b on the same side with respect to the set of plates 22, 24 and on the opposite side with respect to the side where the open ends 98b for the positive flow are positioned.

Preferably, all the open ends 96b, 98b of the raceways 96, 98 are connected to the same collection point and for this purpose they are preferably and conveniently joined so that they are connected to a respective outlet conduit, one for the positive flow and one for the negative flow. Said two outlet conduits are therefore preferably defined on opposite sides with respect to the set of plates 22, 24. The two conduits can then be connected to the respective regulating pumps according to the configuration described above.

The unit 20 must therefore be entirely sealed, except for the side where there is the inlet Fi and the upper ends of the sides from which the outlet raceways 96b and 98b protrude.

In a preferred alternative embodiment, the first and the second plate 22, 24, in addition to being made with conductors 70, 71 with said covering material, also have an electrically insulating covering layer applied to the rear side of the plate 22, 24 itself, according to the above description.

The presence of said covering layer makes it possible to reduce or eliminate the phenomenon of slowing down of the ions that have just crossed the plate.

Therefore, the unit 20 according to the description provided above can be conveniently used to make the desalination equipment 10 of the invention. Preferably, three units 20, 40, 60 and suitable pumps can be used to make the equipment 10 as shown in Figure 1 or two units 20, 40 or 20, 60 and suitable pumps can be used to make the equipment 10', 10" as shown in Figure 2 or 3. Therefore, it is emphasized that the equipment according to the invention does not require high pressure pumps as, for example, in the case of reverse osmosis systems of the known type, with a consequent drastic decrease in power consumption.

Advantageously, furthermore, the use of passive membranes, as is the case with reverse osmosis systems, is also eliminated. Therefore, no flow rate limits are imposed by said membranes and the flow rate can be higher than in the systems of the known type.

In addition, the risks of fouling and contamination of the system are reduced, thus ensuring lower operating costs and greater reliability over time.

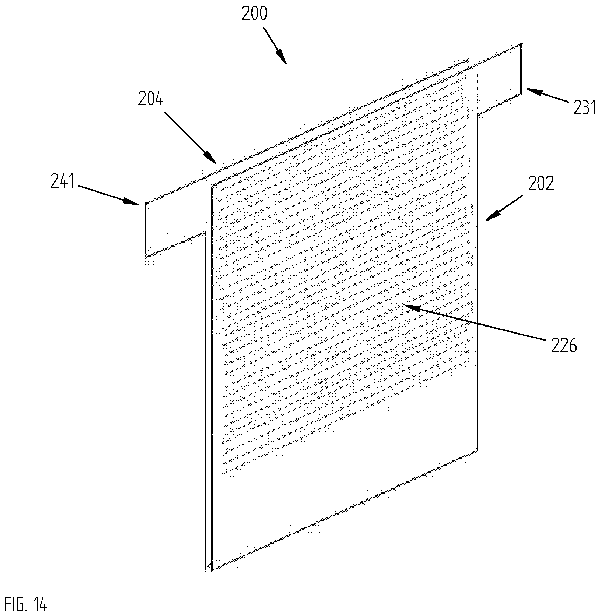

Figure 14 shows a construction variant of a plate 200 which can be used for making the equipment according to the invention.

Said plates 200 can be used to be positively or negatively polarized, according to what has already been described above.

The plate 200 preferably comprises a foil 202 made of an electrically conductive material, preferably a metallic material and even more preferably copper or aluminium. The foil 202 is then preferably coated with an insulating material having a sufficient dielectric constant and at the same time high resistance, as described above, and preferably coated with barium titanate oxide BaTiO3.

The foil 202 preferably comprises a plurality of holes 226, or nanoholes, which constitute the openings suited to allow the passage of water in the manner described above.

Preferably, said nanoholes have a maximum size included between 5nm and 100nm, more preferably a size included between 5nm and 10nm, even more preferably a size of 7.5nm.

Finally, a power supply connector 231 allows the plates with the same polarization to be powered.

In a mirror-like manner, there is also the other foil 204 provided with the same number of nanoholes and the power supply connector 241 with opposite polarity with respect to the power supply connector 231.

The various foils constituting the adjacent plates are then preferably glued together at the ends, keeping them electrically insulated, defining an accordion-like structure, quite similar to what is shown in Figure 8C.

Advantageously, the use of a pair of foils 202, 204 makes it possible to avoid the use of a support strip for the foils 202, 204 due to the inherent stiffness and solidity of the foils themselves.

In a preferred variant embodiment, however, a support strip may also be advantageously used, analogously to what has been described above.

Figures from 15 to 17 show a desalination equipment 110, which implements the new salt water desalination method of the present invention, according to a preferred variant embodiment of the invention.

Component parts equivalent to those of the preferred embodiments described above are identified by the same reference numbers.

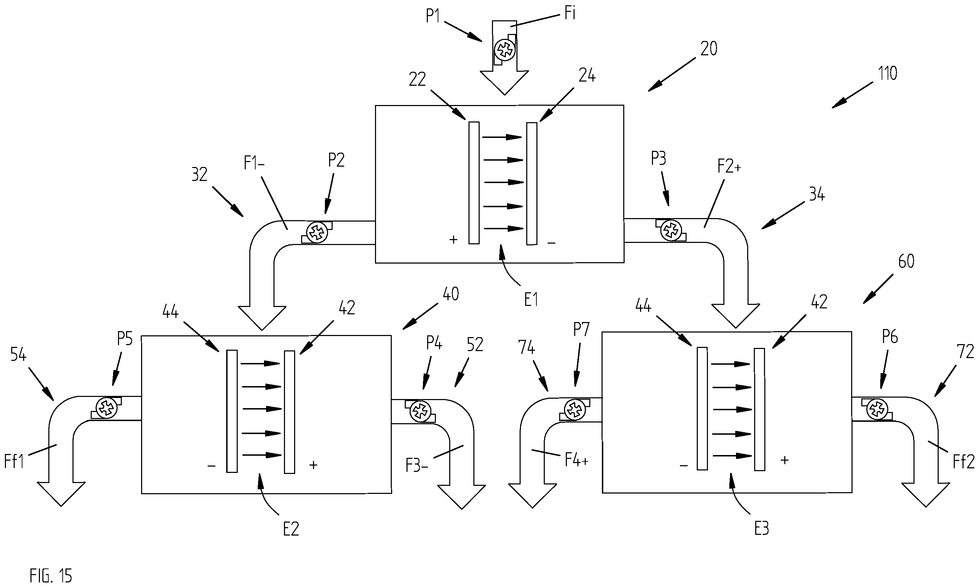

Figure 15 shows a schematic and simplified view of the desalination equipment 110. Also in this embodiment, the objective is to obtain a final flow Ff of desalinated water from an incoming flow Fi of salt water.

According to this embodiment, the method makes it possible to obtain a final flow Ff of desalinated water as the sum of two or more separate flows Ff1, Ff2 of desalinated water.

The incoming flow Fi of salt water is conveyed through a first unit 20 and, preferably, through a first electric field E1 generated in said first unit 20.

The first electric field E1 is preferably obtained through the use of a first plate 22 suited to be positively polarized and a second plate 24 suited to be negatively polarized.

The first electric field E1 affects the incoming flow Fi of salt water to generate a first outgoing flow F1- of negatively ionized water comprising CL- ions and a second outgoing flow F2+ of positively ionized water comprising NA+ ions, wherein the first flow F1- and the second flow F2+ are separate from each other, according to what has been previously described.

According to another aspect of the present invention, the method includes a subsequent step in which the first flow F1- comprising a predominant concentration of negative ions Cl- is conveyed through a second unit 40 and, preferably, through a second electric field E2 generated in said second unit 40. The second electric field E2 is preferably obtained through the use of a first plate 42 suited to be positively polarized and a second plate 44 suited to be negatively polarized.

The second electric field E2 affects the first flow F1- comprising a predominant concentration of negative ions Cl- to generate a final flow F3- of negatively ionized water comprising CL- ions and a final flow Ff1 of desalinated water. The negative ions CL- of the first flow F1-, in fact, are attracted towards the first positively polarized plate 42.

At the level of the first plate 42, therefore, the liquid (water) contains higher concentrations of CL- ions and at the level of the second plate 44, instead, the liquid (water) is devoid of CL- ions (as well as devoid of Na+ ions already previously removed in the first unit 20).

According to an aspect of the present invention, the first plate 42 is conveniently configured to remove the portion of liquid (water) with a higher concentration of CL- ions and generate the final flow F3- of negatively ionized water towards a corresponding third outlet way 52. The final flow F3- and the corresponding third outlet way 52 are preferably external to the area affected by the second electric field E2.

Analogously, the second plate 44 is conveniently configured to remove the desalinated liquid (water) portion and generate the final flow Ff1 towards a corresponding fourth outlet way 54. The final flow Ff1 of desalinated water and the corresponding fourth outlet way 54 are preferably external to the area affected by the second electric field E2.

According to what has been described so far, the new method according to the invention makes it possible to achieve the object of obtaining a first final flow Ff1 of desalinated water from the incoming flow Fi of salt water.

Moreover, as described below, the method makes it possible to achieve the object of obtaining also a second final flow Ff2 of desalinated water which is added to the first final flow Ff1, optimizing the generation of desalinated water.

In fact, preferably, according to another aspect of the present invention, the method includes a step in which the second flow F2+ comprising a high concentration of positive ions Na+ exiting from the first unit 20 is conveyed through a third unit 60 and, preferably, through a third electric field E3 generated in said third unit 60.

The third electric field E3 is preferably obtained by means of a first plate 42 suited to be positively polarized and a second plate 44 suited to be negatively polarized. The third electric field E3 interacts on the second flow F2+ comprising a high concentration of positive ions Na+ to generate a final flow F4+ of positively ionized water comprising Na+ ions and a final flow Ff2 of desalinated water.

In fact, the positive ions Na+ of the second flow F2+ are attracted towards the negatively polarized second plate 44.

At the level of the second plate 44, therefore, the liquid (water) contains higher concentrations of Na+ ions and at the level of the first plate 42, instead, the liquid (water) is devoid of Na+ ions (as well as devoid of Cl- ions, which were already removed previously in the first unit 20).

According to an aspect of the present invention, the second plate 44 is conveniently configured to remove the portion of liquid (water) with a higher concentration of Na+ ions and generate the final flow F4+ of positively ionized water towards a corresponding fifth outlet way 74. The final flow F4+ and the corresponding fifth outlet way 74 are preferably external to the area affected by the third electric field E3.

Analogously, the first plate 42 is conveniently configured to remove the desalinated liquid (water) portion and generate the final flow Ff2 towards a corresponding sixth outlet way 72. The final flow Ff2 of desalinated water and the corresponding sixth outlet way 72 are preferably external to the area affected by the third electric field E3.

Therefore, according to what has been described above, the desalination equipment 110 according to the invention makes it possible to obtain a final flow Ff of desalinated water as the sum of the two separate flows Ff1, Ff2.

Moreover, the final flow F3- of negatively ionized water exiting from the third outlet way 52 of the second unit 40 and/or the final flow F4+ of positively ionized water exiting from the fifth outlet way 74 of the third unit 60 can be discharged or, in turn, conveyed towards further separation units of the type described above to obtain further flows of desalinated water containing no ions (negative Cl- or positive Na+).

Moreover, again, if the final flow Ff should contain residual concentrations of Na+ and Cl- ions, according to the invention it can be conveyed towards further separation units of the type described above in order to further refine/desalinate the water.

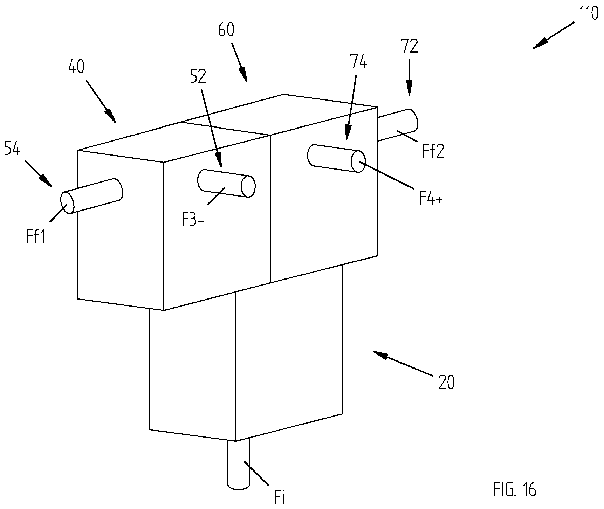

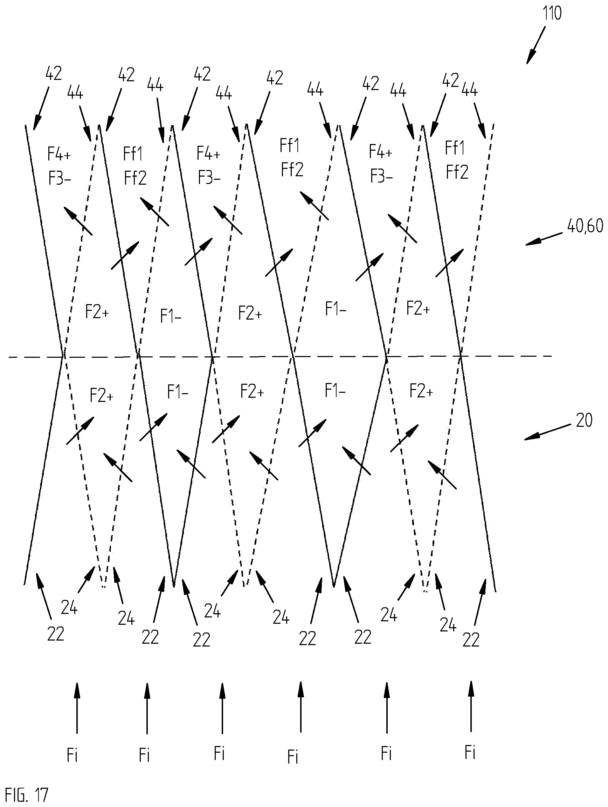

A preferred embodiment of the desalination equipment 110 according to the invention is described below making reference to Figures 16 and 17.

Figure 16 shows an axonometric view of the desalination equipment 110, in which it is possible to identify the incoming flow Fi of salt water feeding the first unit 20, the second and the third unit 40, 60 with the fourth and the sixth outlet way 54, 72 defining the final flows Ff1, Ff2 of desalinated water and with the third and the fifth outlet way 52, 74 of water to be discharged, in accordance with what has been described previously and is shown in Figure 15.

The first unit 20 preferably comprises a plurality of pairs of plates 22, 24, as shown in Figure 17, respectively positively and negatively polarized, and conveniently positioned next to each other to define a set of plates 22, 24.

Thus, a plurality of plates with a plurality of inlets for the flow Fi (and thus a plurality of first units 20) are defined.

The pairs of plates 22, 24 are arranged side by side in such a way as to present alternating polarization in pairs, that is, one pair of positively polarized plates 22 follows one pair of negatively polarized plates 24.

For each pair of plates 22, 24 it is possible to identify the respective salt water inlet channel Fi which is affected by the electric field E1 generated between the two plates 22, 24 (as described above). The water flows out of the plates 22, 24 and the respective flows F1- and F2+ are generated.

The outgoing flows F1- and F2+ are then conveyed towards a plurality of pairs of plates 42, 44, respectively positively and negatively polarized, conveniently positioned side by side to define a set of plates 42, 44.

The pairs of plates 42, 44 are arranged side by side in such a way as to present alternating polarization, that is, one positively polarized plate 42 follows a negatively polarized plate 44.

Therefore, a plurality of plates 42, 44 (and therefore a plurality of second and third units 40, 60) is defined, with a plurality of inlets for the outgoing flows F1- and F2+ coming from the first units 20.

The set of plates 42, 44 arranged in this way defines the second and the third unit 40, 60 in a compact manner, and can actually be considered as a single stage. Thanks to this optimization process, the two second stages 40, 60 are joined together and a single second stage is obtained, with the same functions as well as optimized and simplified construction.

The flows Ff1, Ff2 and F3-, F4+ exiting from the pairs of plates 42, 44 constitute respective outgoing flows exiting from the second and the third unit 40, 60.

The various outgoing flows Ff1, Ff2 of desalinated water can be conveniently collected and conveyed towards a common outlet conduit.

Analogously, the various outgoing flows F3-, F4+ of water with a high concentration of Na+ and Cl- ions can be conveniently collected and conveyed towards a common outlet conduit.

Therefore, the description provided above shows that the equipment of the invention makes it possible to achieve the set objects, and in particular makes it possible to produce desalinated water in a more efficient manner in terms of energy consumption and/or water flow rate compared to the systems known in the art.

Although the present invention has been described with reference to the particular embodiments shown in the figures, it should be noted that the present invention is not limited to the particular embodiments shown and described herein; on the contrary, further variants of the embodiments described herein fall within the scope of the present invention, which is defined by the claims.

## Claims

1. Equipment (10, 110) for the desalination of an incoming flow (Fi) of salt water, comprising:
- a first unit (20) provided with an inlet for said incoming flow (Fi), said first unit (20) comprising a first plate (22; 202) suited to be positively polarized and a second plate (24; 204) suited to be negatively polarized to generate a first electric field (E1), said plates (22, 24; 202, 204) of said first unit (20) being mutually positioned in such a way as to define an area suited to receive said incoming flow (Fi), in which said first electric field (E1) acts, said first plate (22; 202) of said first unit (20) comprising one or more openings (26; 226) suited to allow a first water flow (F1-) to run out towards a first outlet way (32) external to said first electric field (E1) and said second plate (24; 204) of said first unit (20) comprising one or more openings (28; 226) suited to allow a second water flow (F2+) to run out towards a second outlet way (34) external to said first electric field (E1);
- a second unit (40) provided with an inlet which is hydraulically connected to said first outlet way (32), said second unit (40) comprising a first plate (42; 202) suited to be positively polarized and a second plate (44; 204) suited to be negatively polarized to generate a second electric field (E2), said plates (42, 44; 202, 204) of said second unit (40) being mutually positioned in such a way as to define an area suited to receive said first flow (F1-), in which said second electric field (E2) acts, said first plate (42; 202) of said second unit (40) comprising one or more openings suited to allow the outflow of water towards a third outlet way (52) external to said second electric field (E2) and said second plate (44; 204) of said second unit (40) comprising one or more openings suited to allow the outflow of desalinated water towards a fourth outlet way (54) external to said second electric field (E2), and/or
- a third unit (60) provided with an inlet hydraulically connected to said second outlet way (34), said third unit (60) comprising a first plate (62; 202) suited to be positively polarized and a second plate (64; 204) suited to be negatively polarized to generate a third electric field (E3), said plates (62, 64; 202, 204) of said third unit (60) being mutually positioned in such a way as to define an area suited to receive said second flow (F2+), in which said third electric field (E3) acts, said second plate (64; 204) of said third unit (60) comprising one or more openings suited to allow the outflow of water towards a fifth outlet way (74) external to said third electric field (E3) and said first plate (62; 202) of said third unit (60) comprising one or more openings suited to allow the outflow of desalinated water towards a sixth outlet way (72) external to said third electric field (E3), wherein said plates (22, 24; 202, 204) of said first unit (20) and/or said plates (42, 44; 202, 204) of said second unit (40) and/or said plates (62, 64; 202, 204) of said third unit (60) comprise an electrically conductive material,
**characterized in that** said plates (22, 24; 202, 204) of said first unit (20) and/or said plates (42, 44; 202, 204) of said second unit (40) and/or said plates (62, 64; 202, 204) of said third unit (60) are coated with a covering material, and
**in that** said covering material has a relative dielectric constant (De) included between 1,000 and 10,000, and electric resistivity (Re) higher than 10¹² Q*cm, and **in that** said covering material comprises one or more of the materials belonging to the group comprising: barium titanate oxide, doped variants of barium titanate, perovskite mineral, lead zirconate titanate, lead metaniobate.

2. Equipment (10, 110) according to claim 1, **characterized in that** it comprises a pump (P1) associated with said inlet of said first unit (20) and/or a pump (P2) associated with said first outlet way (32) of said first unit (20) and/or a pump (P3) associated with said second outlet way (34) of said first unit (20) and/or a pump (P4) associated with said third outlet way (52) of said second unit (40) and/or a pump (P5) associated with said fourth outlet way (54) of said second unit (40) and/or a pump (P7) associated with said fifth outlet way (74) of said third unit (60) and/or a pump (P6) associated with said sixth outlet way (72) of said third unit (60).

3. Equipment (10, 110) according to any of the claims from 1 to 2, **characterized in that** at least one plate (22, 24, 42, 44, 62, 64) of said plates (22, 24) of said first unit (20) and/or of said plates (42, 44) of said second unit (40) and/or of said plates (62, 64) of said third unit (60) comprises two or more electrically conductive elements (30, 70) arranged side by side and electrically connected to one another, wherein said two elements (30, 70) are spaced to define said one or more openings (26, 28) of said at least one plate (22, 24, 42, 44, 62, 64).

4. Equipment (10, 110) according to claim 3, **characterized in that** said two or more electrically conductive elements (30, 70) are coated with said covering material.

5. Equipment (10, 110) according to any of the claims from 1 to 2, **characterized in that** at least one plate (202, 204) of said plates (202, 204) of said first unit (20) and/or of said plates (202, 204) of said second unit (40) and/or of said plates (202, 204) of said third unit (60) comprises an electrically conductive foil (202, 204) provided with through holes (226) suited to define said one or more openings (226) of said at least one plate (202, 204).

6. Equipment (10, 110) according to claims 5 , **characterized in that** said foil (202, 204) is at least partially coated with said covering material.

7. Equipment (10, 110) according to claim 4 or 6, **characterized in that** one side of said at least one plate (22, 24, 42, 44, 62, 64) of said plates (22, 24) is also provided with at least one electrically insulating covering layer.

8. Equipment (10, 110) according to any of the claims from 1 to 6, **characterized in that** said first unit (20) and/or said second unit (40) and/or said third unit (60) comprise/comprises a plurality of first plates (22, 42, 62, 202) and second plates (24, 44, 64, 204) conveniently configured to receive the same flow coming from said inlet of the respective unit (20, 40, 60).

## Patentansprüche

1. Ausrüstung (10, 110) für die Entsalzung eines ankommenden Salzwasserstroms (Fi), umfassend:
- eine erste Einheit (20), die mit einem Einlass für den ankommenden Strom (Fi) versehen ist, wobei die erste Einheit (20) eine erste Platte (22; 202), die geeignet ist, positiv polarisiert zu werden, und eine zweite Platte (24; 204) umfasst, die geeignet ist, negativ polarisiert zu werden, um ein erstes elektrisches Feld (E1) zu erzeugen, wobei die Platten (22, 24; 202, 204) der ersten Einheit (20) gegenseitig so positioniert sind, dass sie einen Bereich definieren, der geeignet ist, den ankommenden Strom (Fi) aufzunehmen, in dem das erste elektrische Feld (E1) wirkt, wobei die erste Platte (22; 202) der ersten Einheit (20) eine oder mehrere Öffnungen (26; 226) umfasst, die geeignet sind, einen ersten Wasserstrom (F1-) zu einem ersten Auslassweg (32) außerhalb des ersten elektrischen Feldes (E1) auslaufen zu lassen, und die zweite Platte (24; 204) der ersten Einheit (20) eine oder mehrere Öffnungen (28; 226) umfasst, die geeignet sind, einen zweiten Wasserstrom (F2+) zu einem zweiten Auslassweg (34) außerhalb des ersten elektrischen Feldes (E1) auslaufen zu lassen;
- eine zweite Einheit (40), die mit einem Einlass versehen ist, der hydraulisch mit dem ersten Auslassweg (32) verbunden ist, wobei die zweite Einheit (40) eine erste Platte (42; 202), die geeignet ist, positiv polarisiert zu werden, und eine zweite Platte (44; 204) umfasst, die geeignet ist, negativ polarisiert zu werden, um ein zweites elektrisches Feld (E2) zu erzeugen, wobei die Platten (42, 44; 202, 204) der zweiten Einheit (40) gegenseitig so positioniert sind, dass sie einen Bereich definieren, der geeignet ist, den ersten Strom (F1-) aufzunehmen, in dem das zweite elektrische Feld (E2) wirkt, wobei die erste Platte (42; 202) der zweiten Einheit (40) eine oder mehrere Öffnungen aufweist, die geeignet sind, den Ausfluss von Wasser zu einem dritten Auslassweg (52) außerhalb des zweiten elektrischen Feldes (E2) zu ermöglichen, und die zweite Platte (44; 204) der zweiten Einheit (40) eine oder mehrere Öffnungen umfasst, die geeignet sind, den Ausfluss von entsalztem Wasser zu einem vierten Auslassweg (54) außerhalb des zweiten elektrischen Feldes (E2) zu ermöglichen, und/oder
- eine dritte Einheit (60), die mit einem Einlass versehen ist, der hydraulisch mit dem zweiten Auslassweg (34) verbunden ist, wobei die dritte Einheit (60) eine erste Platte (62; 202), die geeignet ist, positiv polarisiert zu werden, und eine zweite Platte (64; 204) umfasst, die geeignet ist, negativ polarisiert zu werden, um ein drittes elektrisches Feld (E3) zu erzeugen, wobei die Platten (62, 64; 202, 204) der dritten Einheit (60) gegenseitig so positioniert sind, dass sie einen Bereich definieren, der geeignet ist, den zweiten Strom (F2+) aufzunehmen, in dem das dritte elektrische Feld (E3) wirkt, wobei die zweite Platte (64; 204) der dritten Einheit (60) eine oder mehrere Öffnungen umfasst, die geeignet sind, den Ausfluss von Wasser zu einem fünften Auslassweg (74) außerhalb des dritten elektrischen Feldes (E3) zu ermöglichen, und die erste Platte (62; 202) der dritten Einheit (60) eine oder mehrere Öffnungen umfasst, die geeignet sind, den Ausfluss von entsalztem Wasser zu einem sechsten Auslassweg (72) außerhalb des dritten elektrischen Feldes (E3) zu ermöglichen, wobei die Platten (22, 24; 202, 204) der ersten Einheit (20) und/oder die Platten (42, 44; 202, 204) der zweiten Einheit (40) und/oder die Platten (62, 64; 202, 204) der dritten Einheit (60) ein elektrisch leitendes Material umfassen,
**dadurch gekennzeichnet, dass** die Platten (22, 24; 202, 204) der ersten Einheit (20) und/oder die Platten (42, 44; 202, 204) der zweiten Einheit (40) und/oder die Platten (62, 64; 202, 204) der dritten Einheit (60) mit einem Abdeckmaterial beschichtet sind, und
**dadurch, dass** das Abdeckmaterial eine relative Dielektrizitätskonstante (De) zwischen 1.000 und 10.000 und einen spezifischen elektrischen Widerstand (Re) von mehr als 10¹² O*cm aufweist, und **dadurch, dass** das Abdeckmaterial eines oder mehrere der Materialien umfasst, die zu der Gruppe gehören, die umfasst: Bariumtitanatoxid, dotierte Varianten von Bariumtitanat, Perowskitmineral, Bleizirkonattitanat, Bleimetaniobat.

2. Ausrüstung (10, 110) nach Anspruch 1, **dadurch gekennzeichnet, dass** sie eine Pumpe (P1), die mit dem Einlass der ersten Einheit (20) assoziiert ist, und/oder eine Pumpe (P2), die mit dem ersten Auslassweg (32) der ersten Einheit (20) assoziiert ist, und/oder eine Pumpe (P3), die mit dem zweiten Auslassweg (34) der ersten Einheit (20) assoziiert ist, und/oder eine Pumpe (P4), die mit dem dritten Auslassweg (52)' der zweiten Einheit (40) assoziiert ist und/oder eine Pumpe (P5), die dem vierten Auslassweg (54) der zweiten Einheit (40) assoziiert ist, und/oder eine Pumpe (P7), die mit dem fünften Auslassweg (74) der dritten Einheit (60) assoziiert ist, und/oder eine Pumpe (P6), die dem sechsten Auslassweg (72) der dritten Einheit (60) assoziiert ist, umfasst.

3. Ausrüstung (10, 110) nach einem der Ansprüche 1 bis 2, **dadurch gekennzeichnet, dass** mindestens eine Platte (22, 24, 42, 44, 62, 64) der Platten (22, 24) der ersten Einheit (20) und/oder der Platten (42, 44) der zweiten Einheit (40) und/oder der Platten (62, 64) der dritten Einheit (60) zwei oder mehr elektrisch leitende Elemente (30, 70) umfasst, die nebeneinander angeordnet und elektrisch miteinander verbunden sind, wobei die zwei Elemente (30, 70) beabstandet sind, um die eine oder mehreren Öffnungen (26, 28) der mindestens einen Platte (22, 24, 42, 44, 62, 64) zu definieren.

4. Ausrüstung (10, 110) nach Anspruch 3, **dadurch gekennzeichnet, dass** die zwei oder mehr elektrisch leitenden Elemente (30, 70) mit dem Abdeckmaterial beschichtet sind.

5. Ausrüstung (10, 110) nach einem der Ansprüche 1 bis 2, **dadurch gekennzeichnet, dass** mindestens eine Platte (202, 204) der Platten (202, 204) der ersten Einheit (20) und/oder der Platten (202, 204) der zweiten Einheit (40) und/oder der Platten (202, 204) der dritten Einheit (60) eine elektrisch leitende Folie (202, 204) umfasst, die mit Durchgangslöchern (226) versehen ist, die geeignet sind, die eine oder mehrere Öffnungen (226) der mindestens einen Platte (202, 204) zu definieren.

6. Ausrüstung (10, 110) nach Anspruch 5, **dadurch gekennzeichnet, dass** die Folie (202, 204) zumindest teilweise mit dem Abdeckmaterial beschichtet ist.

7. Ausrüstung (10, 110) nach Anspruch 4 oder 6, **dadurch gekennzeichnet, dass** eine Seite der mindestens einen Platte (22, 24, 42, 44, 62, 64) der Platten (22, 24) ebenfalls mit mindestens einer elektrisch isolierenden Deckschicht versehen ist.

8. Ausrüstung (10, 110) nach einem der Ansprüche 1 bis 6,
**dadurch gekennzeichnet, dass** die erste Einheit (20) und/oder die zweite Einheit (40) und/oder die dritte Einheit (60) eine Vielzahl von ersten Platten (22, 42, 62, 202) und zweiten Platten (24, 44, 64, 204) umfasst/umfassen, die zweckmäßigerweise so konfiguriert sind, dass sie den gleichen Strom aufnehmen, der von dem Einlass der jeweiligen Einheit (20, 40, 60) kommt.

## Revendications

1. Équipement (10, 110) pour le dessalement d'un flux entrant (Fi) d'eau salée, comprenant :
- une première unité (20) pourvue d'une entrée pour ledit flux entrant (Fi), ladite première unité (20) comprenant une première plaque (22 ; 202) pouvant être polarisée positivement et une deuxième plaque (24 ; 204) pouvant être polarisée négativement pour générer un premier champ électrique (E1), lesdites plaques (22, 24 ; 202, 204) de ladite première unité (20) étant mutuellement positionnées de manière à définir une zone pouvant recevoir ledit flux entrant (Fi), dans laquelle ledit premier champ électrique (E1) agit, ladite première plaque (22 ; 202) de ladite première unité (20) comprenant une ou plusieurs ouvertures (26 ; 226) pouvant permettre à un premier flux d'eau (F1-) de s'écouler vers une première voie de sortie (32) extérieure audit premier champ électrique (E1) et ladite deuxième plaque (24 ; 204) de ladite première unité (20) comprenant une ou plusieurs ouvertures (28 ; 226) pouvant permettre à un deuxième flux d'eau (F2+) de s'écouler vers une deuxième voie de sortie (34) extérieure audit premier champ électrique (E1) ;
- une deuxième unité (40) pourvue d'une entrée qui est hydrauliquement connectée à ladite première voie de sortie (32), ladite deuxième unité (40) comprenant une première plaque (42 ; 202) pouvant être polarisée positivement et une deuxième plaque (44 ; 204) pouvant être polarisée négativement pour générer un deuxième champ électrique (E2), lesdites plaques (42, 44 ; 202, 204) de ladite deuxième unité (40) étant mutuellement positionnées de manière à définir une zone pouvant recevoir ledit premier flux (F1-), dans laquelle ledit deuxième champ électrique (E2) agit, ladite première plaque (42 ; 202) de ladite deuxième unité (40) comprenant une ou plusieurs ouvertures pouvant permettre l'écoulement de l'eau vers une troisième voie de sortie (52) extérieure audit deuxième champ électrique (E2) et ladite deuxième plaque (44 ; 204) de ladite deuxième unité (40) comprenant une ou plusieurs ouvertures pouvant permettre l'écoulement de l'eau dessalée vers une quatrième voie de sortie (54) extérieure audit deuxième champ électrique (E2), et/ou
- une troisième unité (60) pourvue d'une entrée hydrauliquement reliée à ladite deuxième voie de sortie (34), ladite troisième unité (60) comprenant une première plaque (62 ; 202) pouvant être polarisée positivement et une deuxième plaque (64 ; 204) pouvant être polarisée négativement pour générer un troisième champ électrique (E3), lesdites plaques (62, 64 ; 202, 204) de ladite troisième unité (60) étant mutuellement positionnées de manière à définir une zone pouvant recevoir ledit deuxième flux (F2+), dans laquelle ledit troisième champ électrique (E3) agit, ladite deuxième plaque (64 ; 204) de ladite troisième unité (60) comprenant une ou plusieurs ouvertures pouvant permettre l'écoulement de l'eau vers une cinquième voie de sortie (74) extérieure audit troisième champ électrique (E3) et ladite première plaque (62 ; 202) de ladite troisième unité (60) comprenant une ou plusieurs ouvertures pouvant permettre l'écoulement de l'eau dessalée vers une sixième voie de sortie (72) extérieure audit troisième champ électrique (E3), dans laquelle lesdites plaques (22, 24 ; 202, 204) de ladite première unité (20) et/ou lesdites plaques (42, 44 ; 202, 204) de ladite deuxième unité (40) et/ou lesdites plaques (62, 64 ; 202, 204) de ladite troisième unité (60) comprennent un matériau électriquement conducteur,
**caractérisé en ce que** lesdites plaques (22, 24 ; 202, 204) de ladite première unité (20) et/ou lesdites plaques (42, 44 ; 202, 204) de ladite deuxième unité (40) et/ou lesdites plaques (62, 64 ; 202, 204) de ladite troisième unité (60) sont revêtues d'un matériau de recouvrement, et
**en ce que** ledit matériau de recouvrement a une constante diélectrique relative (De) comprise entre 1 000 et 10 000, et une résistivité électrique (Re) supérieure à 10¹² O*cm, et **en ce que** ledit matériau de recouvrement comprend un ou plusieurs des matériaux appartenant au groupe comprenant : l'oxyde de titanate de baryum, les variantes dopées du titanate de baryum, le minéral pérovskite, le titanate de zirconate de plomb, le métaniobate de plomb.

2. Équipement (10, 110) selon la revendication 1, **caractérisé en ce qu'il** comprend une pompe (P1) associée à ladite entrée de ladite première unité (20) et/ou une pompe (P2) associée à ladite première voie de sortie (32) de ladite première unité (20) et/ou une pompe (P3) associée à ladite deuxième voie de sortie (34) de ladite première unité (20) et/ou une pompe (P4) associée à ladite troisième voie de sortie (52)' de ladite deuxième unité (40) et/ou une pompe (P5) associée à ladite quatrième voie de sortie (54) de ladite deuxième unité (40) et/ou une pompe (P7) associée à ladite cinquième voie de sortie (74) de ladite troisième unité (60) et/ou une pompe (P6) associée à ladite sixième voie de sortie (72) de ladite troisième unité (60).

3. Équipement (10, 110) selon l'une quelconque des revendications de 1 à 2, **caractérisé en ce qu'**au moins une plaque (22, 24, 42, 44, 62, 64) desdites plaques (22, 24) de ladite première unité (20) et/ou desdites plaques (42, 44) de ladite deuxième unité (40) et/ou desdites plaques (62, 64) de ladite troisième unité (60) comprend deux ou plusieurs éléments conducteurs d'électricité (30, 70) disposés côte à côte et connectés électriquement l'un à l'autre, dans lesquels lesdits deux éléments (30, 70) sont espacés pour définir lesdites une ou plusieurs ouvertures (26, 28) de ladite au moins une plaque (22, 24, 42, 44, 62, 64).

4. Équipement (10, 110) selon la revendication 3, **caractérisé en ce que** lesdits deux éléments conducteurs d'électricité ou plus (30, 70) sont revêtus dudit matériau de recouvrement.

5. Équipement (10, 110) selon l'une quelconque des revendications de 1 à 2, **caractérisé en ce qu'**au moins une plaque (202, 204) desdites plaques (202, 204) de ladite première unité (20) et/ou desdites plaques (202, 204) de ladite deuxième unité (40) et/ou desdites plaques (202, 204) de ladite troisième unité (60) comprend une feuille électriquement conductrice (202, 204) pourvue de trous traversants (226) pouvant définir lesdites une ou plusieurs ouvertures (226) de ladite au moins une plaque (202, 204).

6. Équipement (10, 110) selon les revendications 5, **caractérisé en ce que** ladite feuille (202, 204) est au moins partiellement revêtue dudit matériau de recouvrement.

7. Équipement (10, 110) selon la revendication 4 ou 6, **caractérisé en ce qu'**un côté de ladite au moins une plaque (22, 24, 42, 44, 62, 64) desdites plaques (22, 24) est également pourvu d'au moins une couche de recouvrement électriquement isolante.

8. Équipement (10, 110) selon l'une quelconque des revendications de 1 à 6, **caractérisé en ce que** ladite première unité (20) et/ou ladite deuxième unité (40) et/ou ladite troisième unité (60) comprennent/comprend une pluralité de premières plaques (22, 42, 62, 202) et de deuxièmes plaques (24, 44, 64, 204) convenablement configurées pour recevoir le même flux provenant de ladite entrée de l'unité respective (20, 40, 60).
